# FASCICULE DE BREVET EUROPEEN

(11) **EP 3 956 646 B1**
(45) Date de publication et mention de la délivrance du brevet: **22.03.2023**
(21) Numéro de dépôt: 20727831.8
(22) Date de dépôt: 17.04.2020
(51) Int. Cl.: G01M 15/04, G01M 15/05, B64F 5/60, G01M 15/14, G05B 23/02

(54) **SYSTÈME DE SURVEILLANCE DE LA SANTÉ D'UN HÉLICOPTÈRE**
SYSTEM ZUR ÜBERWACHUNG DES GESUNDHEITSZUSTANDES EINES HUBSCHRAUBERS
SYSTEM FOR MONITORING THE HEALTH OF A HELICOPTER

(30) Priorité: 18.04.2019 FR 1904149
(43) Date de publication de la demande: 23.02.2022
(73) Titulaire: SAFRAN, 75015 Paris (FR); Safran Helicopter Engines, 64510 Bordes (FR)
(72) Inventeur: RAZAKARIVONY, Sébastien Philippe, 75015 PARIS (FR); FAVRE, Christophe, 64510 BORDES (FR); JOSEPH, Julien, 64510 BORDES (FR); LAMOUROUX, Jean, 64510 BORDES (FR)
(74) Mandataire: Cabinet Camus Lebkiri
(86) Numéro de dépôt international: PCT/FR2020/000135
(87) Numéro de publication internationale: WO 2020/212665

(56) Documents cités:
- EP-A2- 1 103 926
- FR-A1- 3 003 032
- US-B2- 7 062 370

## Description

### DOMAINE TECHNIQUE DE l'INVENTION

La présente invention concerne un système de surveillance de la santé d'un hélicoptère permettant notamment de détecter un changement d'état du moteur de l'hélicoptère. L'invention concerne également le procédé mis en oeuvre par ce système.

L'invention trouve des applications dans le domaine de la maintenance au sol des aéronefs et, en particulier, des hélicoptères.

### ARRIERE-PLAN TECHNOLOGIQUE DE L'INVENTION

Il est connu, dans le domaine de la maintenance au sol des hélicoptères, de réaliser un contrôle de la santé du moteur de l'hélicoptère (c'est-à-dire de l'état de fonctionnement du moteur) afin de déterminer notamment quand une révision est nécessaire. Généralement, le procédé pour contrôler la santé du moteur consiste à comparer les entrées et sorties du moteur par rapport à un modèle de référence, à iso conditions extérieures. Le modèle de référence peut être un modèle physique basé sur les lois de la physique, un modèle par apprentissage construit à partir de données réelles, ou un modèle reposant sur une combinaison d'un modèle physique et d'un modèle par apprentissage.

Ainsi, pour chaque vol effectué, il est connu de calculer un décalage moyen entre la température réelle du moteur et la température estimée par le modèle de référence choisi. Le décalage est calculé pendant une phase de vol stable, c'est-à-dire lorsque le moteur a atteint une vitesse de croisière (ou vitesse nominale) pendant laquelle les variables varient peu, de sorte qu'il est théoriquement le même pendant toute la phase de vol. L'évolution temporelle de ce décalage moyen, entre chaque vol, est surveillée.

Un tel procédé nécessite de connaître les entrées et sorties du moteur, ainsi que les conditions extérieures (Température extérieure, Pression extérieure, etc.) qui, pour la plupart, sont connues et mesurées au moyen de capteurs. Le modèle de référence a pour fonction de normaliser les variables par rapport aux conditions extérieures. En théorie, un décalage dans la température du moteur est dû à un changement de l'état du moteur. En effet, le moteur étant un système thermodynamique, ce décalage ne peut pas être dû au hasard et il est connu qu'un changement de température moteur est provoqué soit par un changement de l'état du moteur, soit par les autres variables. Ainsi, lorsque l'impact des autres variables a été neutralisé grâce au modèle de référence, il ne reste que l'état moteur pour expliquer ce changement.

Cependant, selon les moteurs, certaines actions requises par le pilote et appelées « actions pilotes » peuvent survenir soudainement comme, par exemple, un prélèvement d'air commandé par le pilote pour que le moteur alimente différents systèmes (clim, chauffage, etc...). Ces actions pilotes ne sont pas toujours enregistrées et donc pas prises en compte dans la neutralisation des variables bien qu'elles génèrent un grand écart dans le comportement du moteur à iso conditions. Cet écart est alors interprété - à tort - comme un changement d'état du moteur.

Le document FR 3 003 032 propose une méthode permettant de normaliser les données de vol d'un aéronef à partir de données d'entrée. Les données de vol sont analysées par comparaison entre une valeur moyenne et un modèle numérique. Cette méthode ne permet toutefois pas de détecter automatiquement les actions pilotes non-enregistrées.

Ainsi, dans le procédé du document FR 3 003 032 comme dans la plupart des procédés connus de surveillance de la santé d'un moteur, les actions pilotes sont interprétées comme des changements d'état du moteur, ce qui a pour effet de générer de fausses alertes et d'envoyer l'hélicoptère en révision alors que le moteur ne présente, en réalité, aucune défaillance nécessitant une révision.

Le document EP11 03926 décrit un système de surveillance de la santé d'un moteur d'aéronef en vol qui compare les mesures actuelles avec des mesures générées par un modèle en tenant en compte de l'état du moteur et au moins d'une condition extérieure actuellement mesurée. Un écart entre les mesures et le modèle est déterminé sur une première phase de vol et sur une deuxième phase de vol. La comparaison entre les deux écarts est utilisée pour déterminer un défaut ou un changement d'état du moteur en utilisant une régression linéaire et/ou un réseau de neurone.

Le document US7062370 décrit également un système pour la surveillance d'un moteur d'aéronef qui compare des mesure actuelles avec un modèle.

### RESUME DE L'INVENTION

Pour répondre au problème évoqué ci-dessus de fausses alertes de changement d'état du moteur, le demandeur propose un système de surveillance de la santé d'un hélicoptère dans lequel les actions pilotes non-enregistrées sont détectées et différenciées des changements d'état du moteur.

Selon un premier aspect, l'invention concerne un système de surveillance de la santé d'un hélicoptère, comportant :
- un hélicoptère comprenant au moins un moteur, au moins un capteur de moteur mesurant une variable du moteur, au moins un capteur de conditions extérieures mesurant des variables extérieures au moteur, et un dispositif de mémorisation des données mesurées par les capteurs, et
- un dispositif de détermination d'un changement d'état du moteur configuré pour collecter, auprès du dispositif de mémorisation, les données mesurées par les capteurs de moteur et de conditions extérieures pendant au moins une phase de vol stable d'un premier vol, et mettre en oeuvre les opérations suivantes :
   a) comparaison desdites données mesurées avec un modèle de référence du moteur,
   b) à partir de la comparaison a), détermination à chaque pas de temps de la phase de vol stable, d'un écart instantané entre chaque donnée mesurée et chaque donnée estimée par le modèle de référence du moteur,
   c) détermination, sur l'ensemble de la phase de vol stable, d'un écart global entre les données mesurées et les données estimées par le modèle de référence du moteur,
   d) détermination, à chaque pas de temps de la phase de vol stable, d'un résidu intrinsèque correspondant à une différence entre l'écart instantané et l'écart global,
   e) détermination d'une ou plusieurs portion(s) déviante(s) correspondant à la ou aux partie(s) du résidu intrinsèque ne répondant pas à un critère prédéterminé, chaque portion déviante contenant une information relative à une action pilote non-enregistrée, et
   f) détermination d'un résidu corrigé correspondant à l'écart instantané auquel a été retranchée la portion déviante,
le résidu corrigé étant analysé pour déterminer si l'état du moteur a changé.

Ce système a l'avantage d'utiliser toute la série temporelle des résidus entre le modèle de référence et les données réelles, ce qui permet de s'affranchir des influences des conditions extérieures et découpler les moments où une action pilote non-enregistrée survient des moments où un changement d'état du moteur survient.

De façon avantageuse, l'analyse du résidu corrigé comporte une collecte, par le dispositif de détermination d'un changement d'état du moteur, de données mesurées pendant une phase de vol stable d'au moins un deuxième vol et une comparaison du résidu corrigé relatif au premier vol avec le résidu corrigé relatif au deuxième vol.

Outre les caractéristiques mentionnées ci-dessus, le système selon l'invention peut présenter une ou plusieurs caractéristiques complémentaires parmi les suivantes, considérées individuellement ou selon les combinaisons techniquement possibles :
- les données mesurées par le capteur du moteur sont des valeurs réelles de la température interne du moteur et les données mesurées par le capteur de conditions extérieures sont des valeurs réelles de la température extérieure au moteur ;
- l'hélicoptère comporte au moins un capteur de données de pilotage apte à mesurer le couple ou la vitesse de rotation du moteur connecté au dispositif de mémorisation ;
- les données estimées par modèle est une température interne au moteur ;
- les données estimées par modèle sont un couple ou une vitesse de rotation du moteur ;
- le dispositif de détermination d'un changement d'état du moteur met en oeuvre une opération de confirmation d'une phase de vol stable par analyse du couple ou de la vitesse de rotation du moteur ;
- le résidu intrinsèque est débruité avant d'être comparé à au moins un critère prédéterminé ;
- le critère prédéterminé auquel est comparé le résidu intrinsèque est un seuil de température ;
- les données sont mesurées par les capteurs de moteur et de conditions extérieures pendant plusieurs phases de vol stable, les étapes a) à f) étant mises en oeuvre sur l'ensemble des périodes de vol stable ;
- l'action pilote est un prélèvement d'air.

Selon un second aspect, l'invention concerne un procédé de surveillance de la santé d'un hélicoptère. Ce procédé se caractérise par le fait qu'il est mis en oeuvre par le système de surveillance défini ci-dessus.

### BREVE DESCRIPTION DES FIGURES

D'autres avantages et caractéristiques de l'invention apparaîtront à la lecture de la description, illustrée par les figures dans lesquelles :
La figure 1 représente un exemple schématique d'un système de surveillance de la santé d'un hélicoptère selon l'invention ;
La figure 2 représente schématiquement, sous la forme de courbes, des exemples des valeurs et données mesurées et calculées par le système de surveillance de la santé d'un hélicoptère selon l'invention ; et
La figure 3 représente un exemple de diagramme fonctionnel des opérations mises en oeuvre par le système de la figure 1.

### DESCRIPTION DETAILLEE

Un exemple de réalisation d'un système de surveillance de la santé d'un hélicoptère est décrit en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

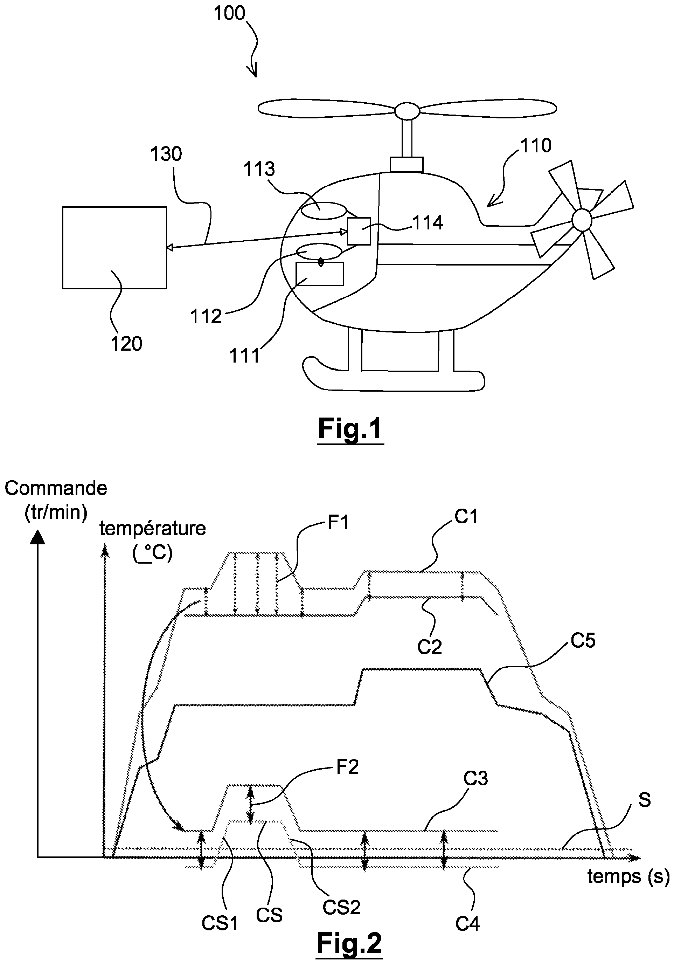

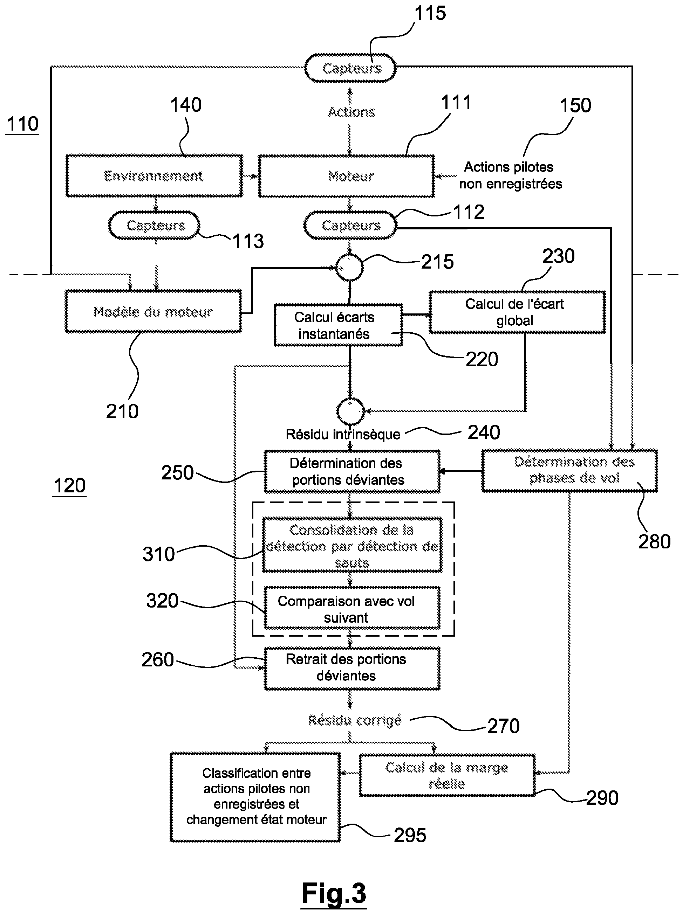

La figure 1 représente schématiquement un exemple de système de surveillance de la santé d'un hélicoptère. Ce système 100 comporte un hélicoptère 110 et un dispositif 120 de détermination d'un changement d'état du moteur, appelé par la suite simplement dispositif de détermination. L'hélicoptère 110 est équipé notamment d'un moteur 111 et de capteurs 112-113. L'hélicoptère comporte, en particulier, au moins un capteur de moteur 112 monté au plus près du moteur et adapté pour mesurer la température interne du moteur. L'hélicoptère comporte en outre au moins un capteur de conditions extérieures 113, par exemple positionné sur un côté de l'hélicoptère, et adapté pour mesurer des variables extérieures au moteur telles que la température extérieure. Dans un mode de réalisation, l'hélicoptère 110 comporte en outre un capteur 115 (représenté sur la figure 3) pour mesurer des données de pilotage comme, par exemple, le couple ou la vitesse de rotation du moteur, le type de capteur (couple ou vitesse de rotation) étant déterminé en fonction du type d'hélicoptère. D'autres capteurs peuvent bien entendu être installés à bord de l'hélicoptère, pour mesurer d'autres variables ou paramètres relatifs aux conditions de vol, comme par exemple des capteurs de pression extérieure, de taux d'humidité, de vitesse, d'accélération, d'altitude, etc., et/ou au moteur, comme par exemple des capteurs de pression interne, de vibrations, etc.

L'hélicoptère comporte également un dispositif 114 de mémorisation des données mesurées par les capteurs 112-113. Ce dispositif de mémorisation 114 est connecté, par liaisons filaires ou liaisons sans fil, à chacun des capteurs et mémorise les différentes données mesurées par ces capteurs durant au moins une partie de la phase de vol stable (ou durant toute la phase de vol stable, voire toute la durée du vol).

On appelle « phase de vol stable » une phase de vol au cours de laquelle les conditions de vol sont sensiblement stables. Les conditions de vol sont considérées comme sensiblement stables lorsque les paramètres de vol ne varient pas ou qu'ils varient peu, par exemple lorsqu'ils varient dans une plage de valeurs d'un pourcentage ou d'une amplitude prédéterminée.

Le dispositif 120 de détermination d'un changement d'état du moteur 111 de l'hélicoptère 110 est adapté pour collecter les données mesurées par les capteurs 112, 113 et/ou 115 au cours d'une période prédéfinie et, en particulier, au cours de la phase de vol stable. Il est configuré pour être connecté au dispositif de mémorisation 114 de l'hélicoptère par une liaison, référencée 130 sur la figure 1, qui peut être une liaison filaire ou une liaison sans fil du type, par exemple, Wifi ou Bluetooth.

Le dispositif de détermination 120 peut être, par exemple, une unité de calcul ou un ordinateur configuré pour mettre en oeuvre les étapes du procédé (décrit ci-dessous) en utilisant les données mesurées par les capteurs implantés dans l'hélicoptère. Le dispositif de détermination 120 peut être embarqué à bord de l'hélicoptère ; il peut également être installé au sol, par exemple dans les locaux de l'unité de maintenance, afin de ne pas générer de masse supplémentaire dans l'hélicoptère.

Le dispositif de détermination 120 héberge un modèle de référence du moteur 111. Ce modèle de référence est un modèle numérique qui représente le comportement normal du moteur, c'est-à-dire le comportement d'un moteur en bonne santé pendant au moins une phase de vol stable. Un modèle de référence est construit pour chaque moteur à partir notamment des paramètres de vol, dont le couple ou la vitesse de rotation, mesurés et enregistrés par le dispositif de mémorisation. Ce peut être un modèle dit « physique » construit en suivant les lois de la physique, ou un modèle dit « par apprentissage » construit par analyse d'une pluralité de données réelles, ou un modèle construit par combinaison d'un modèle physique et d'un modèle par apprentissage.

Le modèle de référence relie des variables du moteur et des variables extérieures au moteur pour déterminer le comportement attendu du moteur lorsque celui-ci est en bonne santé. Il représente, en particulier, la température interne attendue pour le moteur, cette température interne étant une température normalisée, indicative de l'état du moteur et couramment nommée T45, TC, TGT, etc., selon les constructeurs.

Le dispositif de détermination 120 du système de l'invention met en oeuvre une succession d'opérations qui vont être décrites en liaison avec la figure 3. Tout d'abord, le dispositif de détermination 120 collecte les données mesurées par les capteurs internes au moteur et les capteurs extérieurs au moteur et, en particulier par les capteurs 112, 113 et 115. Dans l'exemple de la figure 3, le dispositif de détermination 120 relève les données relatives à la température du moteur 111, mesurées, à un pas de temps prédéfini, par le capteur de moteur 112. Il relève également les données relatives à l'environnement 140 comme, par exemple, la température extérieure au moteur mesurée par le capteur 113. Il relève en outre des données de pilotage comme, par exemple, le couple ou la vitesse de rotation du moteur mesuré(e) par le capteur 115.

Qu'elles soient relatives à l'environnement, au moteur ou au pilotage, les données mesurées par les capteurs 112, 113, 115 peuvent avoir des effets sur le comportement du moteur. De même, des actions pilotes 150, non mesurées et non enregistrées, comme par exemple le prélèvement d'air, peuvent avoir des effets sur le comportement du moteur. Le système de l'invention permet, par comparaison de ces différentes mesures avec le modèle de référence du moteur et par analyse de cette comparaison, de détecter les actions pilotes non-enregistrées afin de pouvoir les différencier des changements d'état du moteur. Une action pilote typique est le prélèvement d'air.

Pour cela, le dispositif de détermination 120 assure, à l'étape 215, une comparaison des données mesurées par le capteur moteur 112 avec le modèle de référence du moteur, référencé 210. A partir de cette comparaison, il détermine, à l'étape 220, un écart instantané entre chaque donnée mesurée par le capteur moteur 112 et chaque donnée estimée par le modèle de référence 210. Un écart instantané est calculé pour un pas de temps prédéfini qui peut être, par exemple, de quelques secondes (typiquement une dizaine de secondes). Ainsi, il est déterminé, à chaque pas de temps, un écart dit instantané entre la valeur réelle mesurée par le capteur 112 et la valeur estimée par le modèle de référence 210. Une pluralité d'écarts instantanés sont donc calculés régulièrement pendant un intervalle de temps comme, par exemple, pendant la durée d'une phase de vol stable.

Le dispositif de détermination 120 détermine, en outre, à l'étape 230, un écart global entre les données mesurées par le capteur moteur 112 et les données estimées par le modèle de référence 210. Cet écart global est calculé à partir de tout ou partie des écarts instantanés déterminés ci-dessus.

L'écart instantané (instant offset, en termes anglo-saxons) est calculé pour chaque pas de temps, par différence entre la température interne réelle du moteur (mesurée par le capteur de moteur 112) et la température interne estimée du moteur (déterminée par le modèle de référence).

L'écart global, ou écart général (overall offset, en termes anglo-saxons), est calculé sur une période prédéfinie comme, par exemple, une partie ou la totalité de la phase de vol stable. L'écart global peut être calculé, par exemple, par moyenne, par mode ou par minimisation. Dans l'exemple de la figure 3, l'écart global est la moyenne, sur la période prédéfinie, des écarts instantanés calculés pendant cette période.

Le dispositif de détermination 120 réalise ensuite une comparaison entre l'écart instantané et l'écart global pour déterminer un résidu intrinsèque 240. Ce résidu intrinsèque 240 est la différence, à chaque pas de temps, entre l'écart instantané et l'écart global. Ce résidu intrinsèque 240 est une donnée significative de l'alignement entre la simulation et la réalité. C'est ce résidu intrinsèque qui va ensuite être traité et analysé sur la période prédéfinie, pour permettre de déterminer l'évolution de l'état du moteur.

Le dispositif de détermination 120 réalise ensuite une opération 250 de détermination des portions déviantes des résidus intrinsèques. Ces portions déviantes sont obtenues en comparant les résidus intrinsèques avec au moins un critère prédéterminé, la partie des résidus intrinsèques ne correspondant pas au critère prédéterminé constituant une portion déviante. Le critère prédéterminé peut être une valeur prédéfinie, un ensemble de valeurs prédéfinies, une ou plusieurs règles aéronautiques, etc. Il est choisi en fonction du moteur et de l'hélicoptère. Le critère prédéterminé peut, par exemple, être une valeur seuil définie en fonction de vols précédents. Dans l'exemple de la figure 3, le critère prédéterminé est un seuil de température dont un exemple sera décrit en relation avec la figure 2. Bien entendu, chaque résidu intrinsèque 240, calculé pour chaque pas de temps, ne génère pas une portion déviante. La portion déviante, lorsqu'elle existe, correspond à la partie du signal contenant une information relative à une action pilote non-enregistrée.

A l'étape 260, la portion déviante déterminée à l'étape 250 est retirée de l'écart instantané correspondant, de sorte à générer un résidu corrigé 270. Autrement dit, l'étape 260 consiste à recalculer un résidu sans portion déviante, qui est appelé résidu corrigé. Ce résidu corrigé 270 peut ensuite être analysé afin de déterminer s'il est le résultat d'une action pilote ayant une incidence sur le moteur ou s'il est le résultat d'un changement d'état du moteur.

Comme expliqué précédemment, cette analyse du résidu corrigé est réalisée pour les résidus détectés pendant une phase de vol stable. Pour cela, le dispositif de détermination 120 vérifie, à l'étape 280, que les données traitées sont bien des données mesurées pendant une phase de vol stable. Cette vérification est réalisée en analysant les données mesurées par le capteur du moteur 112 et les capteurs de données de pilotage 115. S'il est confirmé que le résidu corrigé 270 a bien été calculé pour une période de vol stable, alors le dispositif de détermination 120 détermine, à l'étape 290, une marge dite « réelle » à partir du résidu corrigé.. Une opération de classification 295, par exemple au moyen d'un algorithme de classification automatique, permet de consigner les changements d'état du moteur susceptibles de nécessiter une révision du moteur. Cette opération de classification 295 peut intervenir après la génération du résidu corrigé (étape 270) ou bien avant l'opération 260 de retrait des portions déviantes.

Le procédé qui vient d'être décrit peut être illustré au moyen de courbes telles que celles représentées sur la figure 2. En effet, comme on le comprend de ce qui précède, le dispositif de détermination 120 traite les données comme une série temporelle ; les données, et notamment les résidus, peuvent donc être représentées sous la forme de courbes. Les courbes C1 à C4 représentent la température en fonction du temps pour différents signaux mesurés ou calculés par le dispositif de détermination 120. La courbe C5 représente le signal relatif à une commande enregistrée, en fonction du temps. Plus précisément, la courbe C1 représente un exemple de température réelle mesurée par le capteur de moteur 112. La courbe C2 représente la température estimée avec le modèle de référence à partir de la commande enregistrée de la courbe C5. Les flèches F1 représentent les écarts instantanés calculés dans l'étape 220 du procédé. Les flèches F2 représentent l'écart global calculé à l'étape 230 du procédé. Le résidu intrinsèque 240 obtenu par différence entre les écarts instantanés et l'écart global est représenté par la courbe C3. Cette courbe C3 est donc représentative de la différence entre la température réelle et la température estimée du moteur. La courbe C4 représente le résidu corrigé 270. Ce résidu corrigé 270 comporte une portion CS dont la valeur en température est supérieure à un seuil de température prédéfini S (le seuil de température S est le critère prédéterminé du procédé). Cette portion CS correspond à une action pilote non-enregistrée. On comprendra, par analyse, que cette portion CS ne peut être la résultante d'un changement moteur car elle comporte un front montant CS1 et un front descendant CS2. Or, lorsqu'un saut dans le signal (par exemple un front montant) est la conséquence d'un changement d'état du moteur, il ne peut exister un saut inverse (front descendant) permettant au signal de revenir à son état précédent car une défaillance du moteur ne se répare jamais toute seule. En conséquence, la portion CS est nécessairement due à une action pilote non-enregistrée.

Le procédé mis en oeuvre par le dispositif de détermination 120 peut comporter en outre des opérations optionnelles. Une opération 310 de consolidation des portions déviantes obtenues à l'étape 250 peut être mise en oeuvre par détection de sauts (fronts montants et/ou descendants) dans le signal relatif aux portions déviantes. Comme expliqué en relation avec la figure 2, cette opération 310 permet, par analyse des sauts, de déterminer si le résidu corrigé est généré par un changement d'état du moteur ou une action pilote non-enregistrée.

Une opération de consolidation 320 peut également être mise en oeuvre, en plus ou à la place de l'opération de consolidation 310, pour confirmer la détection d'un changement d'état du moteur. Cette opération de consolidation 320 consiste à comparer les résultats obtenus lors d'un premier vol avec les résultats obtenus lors d'au moins un deuxième vol. En particulier, la portion déviante calculé lors d'un premier vol est comparée avec le résidu corrigé calculé lors d'un deuxième vol ou d'un vol suivant. Si les valeurs de la portion déviante du premier vol et le résidu corrigé du deuxième vol sont proches, alors la portion déviante correspond à un changement de l'état du moteur. Si les valeurs sont différentes, la portion déviante est la résultante d'une action pilote non-enregistrée. En effet, un changement d'état du moteur est permanent tandis qu'une action pilote non-enregistrée est ponctuelle.

Une opération de consolidation supplémentaire (non représentée sur les figures) peut également être ajoutée, notamment lorsque le couple et/ou la vitesse de rotation du moteur sont mesurés. Cette opération de consolidation supplémentaire consiste à comparer les fluctuations du résidu instantané sur d'autres variables que la température, telles que le couple ou la vitesse de rotation du moteur, afin de confirmer si la portion déviante est une action pilote ou un changement d'état moteur. En effet, dans le cas d'un changement d'état du moteur, les résidus instantanés sur les autres variables dévieront simultanément.

Le procédé mis en oeuvre par le dispositif de détermination 120 peut également comporter, après l'opération de détermination du résidu intrinsèque 240, une opération supplémentaire de débruitage dudit résidu intrinsèque. Cette opération de débruitage peut être mise en oeuvre, par exemple, par lissage par moyenne ou par médiane, dans le but de faciliter les étapes 310, 320, 260, et 290.

Le procédé mis en oeuvre par le dispositif de détermination 120 a été décrit précédemment dans le cas où le paramètre moteur mesuré par le capteur de moteur 112 est la température interne du moteur. Bien entendu, d'autres paramètres peuvent être pris en considération à la place, ou en plus, de la température interne du moteur, le procédé restant identique quel que soit le paramètre choisi. Par exemple, des données relatives au couple ou à la vitesse de rotation du moteur peuvent être traitées à la place ou en plus de la température interne du moteur.

## Revendications

1. Système de surveillance de la santé d'un hélicoptère (110) ayant au moins un moteur (111), ledit système comportant :
- au moins un capteur de moteur (112) mesurant une variable du moteur, au moins un capteur de conditions extérieures (113) mesurant des variables extérieures au moteur, et un dispositif (114) de mémorisation des données mesurées par les capteurs, et
- un dispositif (120) de détermination d'un changement d'état du moteur configuré pour collecter, auprès du dispositif de mémorisation (114), les données mesurées par les capteurs de moteur et de conditions extérieures pendant au moins une phase de vol stable d'un premier vol, et mettre en oeuvre les opérations suivantes :
a) comparaison (215) desdites données mesurées avec un modèle de référence du moteur (210),
b) à partir de la comparaison a), détermination (220), à chaque pas de temps de la phase de vol stable, d'un écart instantané entre chaque donnée mesurée et chaque donnée estimée par le modèle de référence du moteur (210),
c) détermination (230), sur l'ensemble de la phase de vol stable, d'un écart global entre les données mesurées et les données estimées par le modèle de référence du moteur, l'écart global étant calculé à partir d'une partie au moins des écarts instantanés déterminés à l'étape b),
d) détermination, à chaque pas de temps de la phase de vol stable, d'un résidu intrinsèque (240) correspondant à une différence entre l'écart instantané et l'écart global,
e) détermination d'une ou plusieurs portion(s) déviante(s) (250) correspondant à la ou aux partie(s) du résidu intrinsèque (240) ne répondant pas à un critère prédéterminé, chaque portion déviante, lorsqu'elle existe, contenant une information relative à une action pilote non-enregistrée, et
f) détermination (260) d'un résidu corrigé (270) correspondant à l'écart instantané auquel a été retranchée la ou les portion(s) déviante(s),
le résidu corrigé (270) étant analysé afin de déterminer s'il est le résultat d'une action pilote ayant une incidence sur le moteur ou s'il est le résultat d'un changement d'état du moteur.

2. Système de surveillance selon la revendication 1, **caractérisé en ce que** l'analyse du résidu corrigé (270) comporte une collecte, par le dispositif de détermination d'un changement d'état du moteur, de données mesurées pendant une phase de vol stable d'au moins un deuxième vol et une comparaison (310) de la portion déviante relative au premier vol avec le résidu corrigé relatif au deuxième vol.

3. Système de surveillance selon la revendication 1 ou 2, **caractérisé en ce que** l'hélicoptère comporte au moins un capteur de données de pilotage (115) apte à mesurer le couple ou la vitesse de rotation du moteur connecté au dispositif de mémorisation (114).

4. Système de surveillance selon l'une quelconque des revendications 1 à 3, **caractérisé en ce que** les données mesurées par le capteur de moteur (112) sont des valeurs réelles de la température interne au moteur (111) et les données mesurées par le capteur de conditions extérieures (113) sont des valeurs réelles de la température extérieure au moteur.

5. Système de surveillance selon l'une quelconque des revendications 1 à 4, **caractérisé en ce que** les données estimées par modèle sont une température interne au moteur.

6. Système de surveillance selon l'une quelconque des revendications 1 à 4, **caractérisé en ce que** les données estimées par modèle sont un couple ou une vitesse de rotation du moteur.

7. Système de surveillance selon l'une quelconque des revendications 3 à 6, **caractérisé en ce que** le dispositif (120) de détermination d'un changement d'état du moteur met en oeuvre une opération (280) de confirmation d'une phase de vol stable par analyse du couple ou de la vitesse de rotation du moteur mesurée par le capteur de données de pilotage (115).

8. Système de surveillance selon l'une quelconque des revendications 1 à 7, **caractérisé en ce que** le résidu intrinsèque (240) est débruité avant d'être comparé à au moins un critère prédéterminé.

9. Système de surveillance selon la revendication 8, **caractérisé en ce que** le critère prédéterminé auquel est comparé le résidu intrinsèque (240) est un seuil de température (S).

10. Système de surveillance selon l'une quelconque des revendications 1 à 9, **caractérisé en ce que** les données sont mesurées par les capteurs de moteur et de conditions extérieures pendant plusieurs phases de vol stable, les étapes a) à f) étant mises en oeuvre sur l'ensemble des périodes de vol stable.

11. Système de surveillance selon l'une quelconque des revendications 1 à 10, **caractérisé en ce que** l'action pilote est un prélèvement d'air.

12. Procédé de surveillance de la santé d'un hélicoptère, **caractérisé en ce qu'**il comporte les étapes a) à f) selon la revendication 1, mises en oeuvre par le système de surveillance selon l'une quelconque des revendications 1 à 11.

## Patentansprüche

1. System zur Überwachung des Betriebszustands eines Hubschraubers (110) mit mindestens einem Motor (111), wobei das System Folgendes umfasst:
- mindestens einen Motorsensor (112), der eine Variable des Motors misst, mindestens einen Sensor für Außenbedingungen (113), der Variablen außerhalb des Motors misst, und eine Speichervorrichtung (114) für die von den Sensoren gemessenen Werte, und
- eine Vorrichtung (120) zur Bestimmung einer Änderung des Zustands des Motors, die so konfiguriert ist, dass sie die von den Motorsensoren und den Sensoren für Außenbedingungen während mindestens einer stabilen Flugphase eines ersten Fluges gemessenen Werte bei der Speichervorrichtung (114) erfasst, und die folgenden Schritte ausführt:
a) Vergleich (215) der gemessenen Werte mit einem Motor-Referenzmodell (210),
b) ausgehend von dem Vergleich a), Bestimmung (220), während jedes Zeitabschnitts der stabilen Flugphase, einer momentanen Abweichung zwischen jedem gemessenen Wert und jedem durch das Motor-Referenzmodell (210) geschätzten Wert,
c) Bestimmung (230), während der gesamten stabilen Flugphase, einer Gesamtabweichung zwischen den gemessenen Werten und den durch das Motor-Referenzmodell geschätzten Werten, wobei die Gesamtabweichung aus mindestens einem Teil der in Schritt b) bestimmten momentanen Abweichungen berechnet wird,
d) Bestimmung, während jedes Zeitabschnitts der stabilen Flugphase, eines intrinsischen Restwerts (240), der einer Differenz zwischen der momentanen Abweichung und der Gesamtabweichung entspricht,
e) Bestimmung eines oder mehrerer abweichender Anteile (250), die dem Teil oder den Teilen des intrinsischen Restwerts (240) entsprechen, die ein vorgegebenes Kriterium nicht erfüllen, wobei jeder abweichende Anteil, sofern vorhanden, Informationen über eine nicht aufgezeichnete Aktion des Piloten enthält, und
f) Bestimmung (260) eines korrigierten Restwerts (270), der der momentanen Abweichung entspricht, von der der abweichende Anteil oder die abweichenden Anteile abgezogen wurden,
wobei der korrigierte Restwert (270) analysiert wird, um festzustellen, ob er das Ergebnis einer Aktion des Piloten ist, die eine Auswirkung auf den Motor hat, oder ob er das Ergebnis einer Änderung des Zustands des Motors ist.

2. Überwachungssystem nach Anspruch 1, **dadurch gekennzeichnet, dass** die Analyse des korrigierten Restwerts (270) eine Erfassung von Werten durch die Vorrichtung zur Bestimmung einer Änderung des Zustands des Motors, die während einer stabilen Flugphase mindestens eines zweiten Fluges gemessen wurden, und einen Vergleich (310) des auf den ersten Flug bezogenen abweichenden Anteils mit dem auf den zweiten Flug bezogenen korrigierten Restwert umfasst.

3. Überwachungssystem nach Anspruch 1 oder 2, **dadurch gekennzeichnet, dass** der Hubschrauber mindestens einen Flugsteuerungsdatensensor (115) umfasst, der dazu geeignet ist, das Drehmoment oder die Drehzahl des mit der Speichereinrichtung (114) verbundenen Motors zu messen.

4. Überwachungssystem nach einem der Ansprüche 1 bis 3, **dadurch gekennzeichnet, dass** die von dem Motorsensor (112) gemessenen Werte Istwerte der Temperatur innerhalb des Motors (111) sind und die von dem Sensor für Außenbedingungen (113) gemessenen Werte Istwerte der Temperatur außerhalb des Motors sind.

5. Überwachungssystem nach einem der Ansprüche 1 bis 4, **dadurch gekennzeichnet, dass** die von dem Modell geschätzten Werte Temperaturen im Inneren des Motors sind.

6. Überwachungssystem nach einem der Ansprüche 1 bis 4, **dadurch gekennzeichnet, dass** die von dem Modell geschätzten Werte ein Drehmoment oder eine Drehzahl des Motors sind.

7. Überwachungssystem nach einem der Ansprüche 3 bis 6, **dadurch gekennzeichnet, dass** die Vorrichtung (120) zur Bestimmung einer Änderung des Zustands des Motors einen Vorgang (280) zur Bestätigung einer stabilen Flugphase durch Auswertung des von dem Flugsteuerungsdatensensor (115) gemessenen Drehmoments oder der Drehzahl des Motors durchführt.

8. Überwachungssystem nach einem der Ansprüche 1 bis 7, **dadurch gekennzeichnet, dass** der intrinsische Restwert (240) rauschunterdrückt wird, bevor er mit mindestens einem vorgegebenen Kriterium verglichen wird.

9. Überwachungssystem nach Anspruch 8, **dadurch gekennzeichnet, dass** das vorgegebene Kriterium, mit dem der intrinsische Restwert (240) verglichen wird, ein Temperaturschwellenwert (S) ist.

10. Überwachungssystem nach einem der Ansprüche 1 bis 9, **dadurch gekennzeichnet, dass** die Werte von den Motorsensoren und den Sensoren für Außenbedingungen während mehrerer stabiler Flugphasen gemessen werden, wobei die Schritte a) bis f) während aller stabilen Flugperioden durchgeführt werden.

11. Überwachungssystem nach einem der Ansprüche 1 bis 10, **dadurch gekennzeichnet, dass** die Aktion des Piloten eine Entnahme von Luft ist.

12. Verfahren zur Überwachung des Betriebszustands eines Hubschraubers, **dadurch gekennzeichnet, dass** es die Schritte a) bis f) nach Anspruch 1 umfasst, die durch das Überwachungssystem nach einem der Ansprüche 1 bis 11 durchgeführt werden.

## Claims

1. System for monitoring the health of a helicopter (110) having at least one engine (111), said system comprising:
- at least one engine sensor (112) measuring an engine variable, at least one external conditions sensor (113) measuring variables outside of the engine, and a device (114) for memorising data measured by the sensors, and
- a device (120) for determining a change of state of the engine configured to collect, from the memorisation device (114), the data measured by the engine and external conditions sensors during at least one stable flight phase of a first flight, and implementing the following operations:
a) comparison (215) of said measured data with a reference model of the engine (210),
b) from comparison a), determination (220), at each time step of the stable flight phase, of an instant offset between each measured datum and each datum estimated by the reference model of the engine (210),
c) determination (230), over the whole of the stable flight phase, of an overall offset between the measured data and the data estimated by the reference model of the engine, the overall offset being calculated from a part at least of the instant offsets determined at step b),
d) determination, at each time step of the stable flight phase, of an intrinsic residual (240) corresponding to a difference between the instant offset and the overall offset,
e) determination of one or several deviant portion(s) (250) corresponding to the part(s) of the intrinsic residual (240) not meeting a predetermined criterion, each deviant portion, when it exists, containing information relating to a non-recorded pilot action, and
f) determination (260) of a corrected residual (270) corresponding to the instant offset from which the deviant portion(s) has been removed,
the corrected residual (270) being analysed in order to determine if it is the result of a pilot action having an incidence on the engine or if it is the result of a change of state of the engine.

2. Monitoring system according to claim 1, **characterised in that** the analysis of the corrected residual (270) comprises a collection, by the device for determining a change of state of the engine, of data measured during a stable flight phase of at least one second flight and a comparison (310) of the deviant portion relating to the first flight with the corrected residual relating to the second flight.

3. Monitoring system according to claim 1 or 2, **characterised in that** the helicopter comprises at least one piloting data sensor (115) able to measure the torque or the speed of rotation of the engine connected to the memorisation device (114).

4. Monitoring system according to any one of claims 1 to 3, **characterised in that** the data measured by the engine sensor (112) are real values of the temperature inside the engine (111) and the data measured by the external conditions sensor (113) are real values of the temperature outside the engine.

5. Monitoring system according to any one of claims 1 to 4, **characterised in that** the data estimated by model are a temperature inside the engine.

6. Monitoring system according to any one of claims 1 to 4, **characterised in that** the data estimated by model are a torque or a speed of rotation of the engine.

7. Monitoring system according to any one of claims 3 to 6, **characterised in that** the device (120) for determining a change of state of the engine implements an operation (280) of confirmation of a stable flight phase by analysis of the torque or the speed of rotation of the engine measured by the piloting data sensor (115).

8. Monitoring system according to any one of claims 1 to 7, **characterised in that** the intrinsic residual (240) is de-noised before being compared to at least one predetermined criterion.

9. Monitoring system according to claim 8, **characterised in that** the predetermined criterion with which the intrinsic residual (240) is compared is a temperature threshold (S).

10. Monitoring system according to any one of claims 1 to 9, **characterised in that** the data are measured by the engine and external conditions sensors during several stable flight phases, steps a) to f) being implemented over the whole of the stable flight periods.

11. Monitoring system according to any one of claims 1 to 10, **characterised in that** the pilot action is an air bleed.

12. Method for monitoring the health of a helicopter, **characterised in that** it comprises steps a) to f) according to claim 1, implemented by the monitoring system according to any one of claims 1 to 11.
